# DEMANDE DE BREVET EUROPEEN

(11) **EP 4 799 845 A1**
(43) Date de publication de la demande: **02.09.2026**
(21) Numéro de dépôt: 26161183.4
(22) Date de dépôt: 27.02.2026
(51) Int. Cl.: B60K 35/21, B60K 35/22, B60K 35/60, F21V 8/00, G02B 6/00

(54) **SYSTÈME D'AFFICHAGE POUR VÉHICULE**

(30) Priorité: 27.02.2025 FR 2502000
(71) Demandeur: Faurecia Intérieur Industrie, 92000 Nanterre (FR)
(72) Inventeur: DA CRUZ, Stéphane, 69960 CORBAS (FR); DA SILVA, Edouard, 95300 PONTOISE (FR); LIEM, Steve, 95610 ERAGNY SUR OISE (FR)
(74) Mandataire: Lavoix

(57) **Abrégé**

Le système d'affichage comprend :
- un dispositif d'affichage (20) comportant un écran d'affichage (22) ;
- un dispositif réfléchissant (32) comportant :
- une lame semi-réfléchissante s'étendant selon un plan de réflexion (PREF) et destinée à réfléchir des images réelles affichées par l'écran d'affichage (22) vers les passagers pour générer des images virtuelles (IVIR) correspondantes dans un second plan (P2) ;
- un film translucide appliqué sur la lame semi-réfléchissante et comportant au moins un élément d'information ;
- au moins une unité d'éclairage (62) apte à éclairer l'au moins un élément d'information.

L'au moins une unité d'éclairage (62) comprend une source de lumière pour chaque élément d'information, chaque source de lumière étant agencée le long d'un bord du film translucide et étant configurée pour éclairer l'élément d'information correspondant à travers l'épaisseur du film translucide.

## Description

La présente invention concerne un système d'affichage pour un véhicule comprenant :
- un dispositif d'affichage comportant au moins un écran d'affichage destiné à être dissimulé des passagers dudit véhicule et étant configuré pour afficher des images réelles dans un premier plan ;
- un dispositif réfléchissant s'étendant selon un plan de réflexion et comportant :
   - au moins une lame semi-réfléchissante s'étendant selon le plan de réflexion et destinée à réfléchir les images réelles affichées par l'au moins un écran d'affichage vers les passagers pour générer des images virtuelles correspondantes dans un second plan ;
   - au moins un film translucide appliqué sur l'au moins une lame semi-réfléchissante et comportant au moins un élément d'information, l'au moins un film translucide s'étendant parallèlement au plan de réflexion et ayant une épaisseur selon une direction sensiblement perpendiculaire au plan de réflexion ;
   - au moins une unité d'éclairage apte à éclairer l'au moins un élément d'information.

Un tel système d'affichage est par exemple agencé sur un tableau de bord du véhicule et est configuré pour afficher à destination de passagers du véhicule des informations relatives au fonctionnement d'équipements embarqués dans le véhicule, à la navigation, aux communications, au divertissement (films, musique, jeux, etc) ou autres.

En particulier, au moins un système d'affichage est destiné à l'affichage d'informations essentielles à la conduites par exemple relatives au fonctionnement d'organes essentiels du véhicule et/ou à la navigation, à destination du conducteur. Il est nécessaire que ces informations soient affichées de manière simple et claire ainsi que de façon centralisée afin que le conducteur du véhicule puisse être renseigné le plus rapidement possible.

Afin de pouvoir afficher une multitude de types d'informations, certains systèmes d'affichage de l'état de la technique présentent une structure complexe impliquant de nombreux organes d'affichage. Toutefois, la réalisation de tels systèmes d'affichage est délicate et l'encombrement du système est important.

En outre, les images virtuelles affichées à destination des passagers sont souvent saturées en informations si bien qu'il est difficile pour le conducteur par exemple de se renseigner aisément sur un aspect particulier du véhicule et/ou de la navigation. Ainsi, il peut être difficile d'attirer efficacement l'attention du conducteur sur des informations essentielles à la conduite.

Également, la surcharge d'information sur l'image rend l'affichage peu esthétique.

Enfin, les images virtuelles peuvent présenter une intensité lumineuse limitée ce qui n'est pas toujours compatible avec l'affichage d'informations réglementaires importantes qui doivent avoir une intensité lumineuse minimale afin d'être facilement discernables par le conducteur.

Un but de l'invention est alors de proposer un système d'affichage pour véhicule dans lequel la prise d'information par les passagers est facilitée et l'affichage est davantage esthétique, le système d'affichage étant simple à fabriquer et peu encombrant.

A cet effet, l'invention a pour objet un système d'affichage du type susmentionné et dans lequel l'au moins une unité d'éclairage comprend une source de lumière pour chaque élément d'information, chaque source de lumière étant agencée le long d'un bord de l'au moins un film translucide et étant configurée pour éclairer l'élément d'information correspondant à travers l'épaisseur de l'au moins un film translucide.

Grâce à l'invention, une impression de profondeur des images virtuelles est générée par la réflexion des images réelles sur la lame semi-réfléchissante. Les éléments d'information apparaissent virtuellement devant les images virtuelles pour les passagers du véhicule, ce qui les met particulièrement en évidence.

En outre, cette impression de profondeur entre les éléments d'information et les images virtuelles améliorent l'esthétique de l'affichage.

Enfin, la fabrication du système d'affichage est facilitée et son encombrement est réduit puisque l'unité d'éclairage est agencée en bord de l'au moins un film translucide et que l'éclairage des éléments d'information a lieu dans l'épaisseur de l'au moins un film.

Suivant d'autres aspects avantageux de l'invention, le système d'affichage comprend une ou plusieurs des caractéristiques suivantes, prises isolément ou suivant toutes les combinaisons techniquement possibles :
- l'au moins une lame semi-réfléchissante comprend un substrat comportant une face avant orientée sensiblement vers l'au moins un écran d'affichage et une face arrière opposée à la face avant, l'au moins un film translucide étant appliquée sur la face arrière du substrat ;
- le dispositif réfléchissant comprend au moins un film antireflet arrière s'étendant sur l'ensemble de l'au moins un film translucide, de sorte que l'au moins un film translucide s'étende entre la lame semi-réfléchissante et le film antireflet arrière ;
- l'au moins un film translucide comprend une partie d'information dans laquelle sont agencés les éléments d'information, la lame semi-réfléchissante comprenant au moins un traitement semi-réflectif s'étendant sur au moins une partie de la face avant du substrat de sorte à être agencée en regard d'au moins l'au moins une partie d'information ;
- l'au moins un élément d'information est un pictogramme ;
- le pictogramme est choisi dans une liste comprenant :
   - un indicateur d'usage de feux, tels que des feux de position, de croisement, de route, de brouillard avant et/ou arrière, de clignotants et/ou de détresse ;
   - un indicateur d'anomalie comme par exemple un indicateur de niveau d'huile bas, d'usure des plaquettes de frein avant, de dysfonctionnement de l'ABS, de défaillance de la direction assistée, de dysfonctionnement des airbags, de défaillance de l'ESP, de problème d'ampoule, de niveau de liquide lave-glace bas, de défaut d'un composant électronique, de problème de dépollution du moteur, de présence d'eau dans le filtre à carburant et/ou de niveau de carburant faible ;
   - un indicateur de danger comme par exemple un indicateur de frein à main serré, de défaillance des freins, de défaillance des airbags, de portière du coffre ouverte, de batterie faible, de pression anormale de l'huile de moteur, de surchauffe de l'huile de moteur, de température anormale du liquide de refroidissement, de pression anormale des pneus, de dysfonctionnement de l'antivol de direction et/ou de ceinture de sécurité non bouclée ;
- l'au moins un élément d'information est imprimé et/ou gravé, en particulier micro-imprimé et/ou micro-gravé ou nano-imprimé et/ou nano-gravé, sur un corps de l'au moins un film translucide ;
- l'au moins un film translucide comprend une pluralité de zones d'information, chaque zone d'information comportant un élément d'information, les zones d'information étant compartimentées, chaque source de lumière étant agencée en regard d'une zone d'information et étant configurée pour éclairer uniquement la zone d'information en regard de laquelle elle est agencée ;
- le dispositif réfléchissant délimite dans le plan de réflexion :
   - une surface de réflexion destinée à réfléchir les images réelles affichées par l'au moins un écran d'affichage ; et
   - une surface d'information destinée à l'illumination des éléments d'information ; les surfaces de réflexion et d'information étant séparées et adjacentes.

L'invention concerne en outre un tableau de bord d'un véhicule comprenant un corps et un système d'affichage tel que décrit précédemment, le système d'affichage étant monté sur le corps du tableau de bord.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique simplifiée de plusieurs vues correspondant à différentes portions d'un tableau de bord de véhicule selon l'invention, les vues étant agencées les unes au-dessus des autres dans une optique de simplification ;
[Fig. 2] la figure 2 est une représentation schématique simplifiée d'une vue en coupe d'un système d'affichage du tableau de bord de la figure 1, selon l'invention ;
[Fig. 3] la figure 3 est une représentation schématique simplifiée d'une vue en coupe d'un dispositif réfléchissant du système d'affichage de la figure 2 ;
[Fig. 4] la figure 4 est une représentation schématique simplifiée en vue de face d'une portion du dispositif réfléchissant de la figure 3 ;
[Fig. 5] la figure 5 est une représentation schématique simplifiée en vue de face du système d'affichage de la figure 2 tel que perçu par un passager du véhicule.

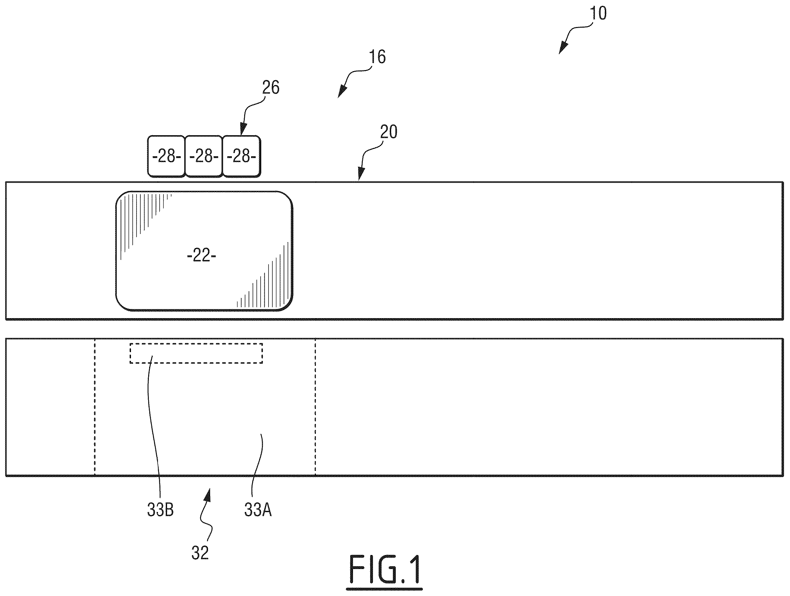

En référence aux figures 1 à 5, on décrit un tableau de bord 10 d'un véhicule.

Le véhicule est par exemple un véhicule terrestre, notamment une automobile. Toutefois, l'invention ne se limite pas à un véhicule terrestre. Ainsi, en variante, le véhicule est un véhicule aérien, maritime ou autre.

Le tableau de bord 10 comprend un corps 12 de tableau de bord et un système d'affichage 16 selon l'invention.

Le système d'affichage 16 est par exemple monté sur le corps 12 du tableau de bord 10.

En particulier, le système d'affichage 16 est monté sur une portion du corps 12 du tableau de bord 10 destiné à être agencé sensiblement dans le champ de vision d'un conducteur du véhicule.

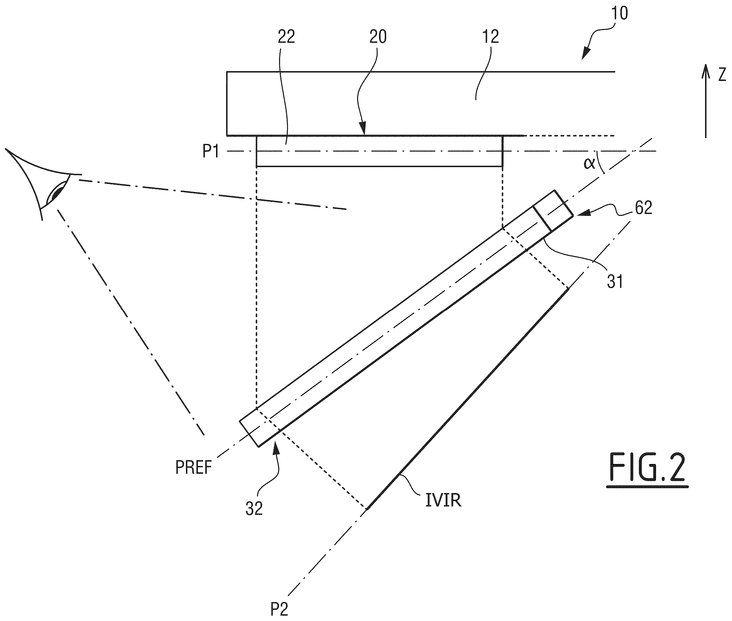

En référence aux figures 1 et 2, le système d'affichage 16 comprend un dispositif d'affichage 20 et un dispositif réfléchissant 32.

Sur la figure 1, le dispositif d'affichage 20 et le dispositif réfléchissant 32 sont illustrés de façon schématique dans le plan de la feuille pour faciliter la compréhension. L'agencement réel du dispositif d'affichage 20 et du dispositif réfléchissant 32 est décrit dans ce qui suit.

Le dispositif d'affichage 20 comporte au moins un écran d'affichage 22.

Optionnellement, le dispositif d'affichage 20 comporte en outre au moins un afficheur tête-haute 26.

Dans ce qui suit, on décrit un unique écran d'affichage 22 et le cas échéant un seul afficheur tête-haute 26. Bien entendu, lorsque le dispositif d'affichage 20 comporte une pluralité d'écrans d'affichage et/ou le cas échant une pluralité d'afficheurs tête-haute, cette description s'applique à un ou plusieurs écran(s) d'affichage de cette pluralité d'écrans d'affichage et le cas échéant à un ou plusieurs afficheur(s) tête-haute de cette pluralité d'afficheurs tête-haute.

L'écran d'affichage 22 est destiné à être dissimulé des passagers dudit véhicule.

Par exemple, comme illustré sur la figure 2, l'écran d'affichage 22 est fixé au corps 12 du tableau de bord 10 et s'étend dans un plan par exemple sensiblement horizontal, notamment sensiblement parallèle à un plancher du véhicule.

Avantageusement, l'écran d'affichage 22 est agencé sensiblement au-dessus du dispositif réfléchissant 32, selon une direction d'élévation Z sensiblement orthogonale au plancher du véhicule.

L'écran d'affichage 22 est configuré pour afficher des images réelles dans un premier plan P1. Le premier plan P1 est par exemple sensiblement parallèle au plancher du véhicule.

Avantageusement, l'écran d'affichage 22 est configuré pour afficher des images réelles représentatives d'informations correspondant à une assistance à la conduite, par exemple à une assistance à la navigation par GPS (Géo-positionnement par satellite ; en anglais « *Global Positioning System* ») et/ou une aide à la conduite de type ADAS (de l'anglais « *Advanced Driver Assistance System* »).

Par exemple, les informations correspondant à une assistance à la navigation par GPS comprennent des informations relatives à au moins un élément pris dans la liste suivante :
- navigation telles que carte en temps réel, itinéraire et directions, distance restante, temps estimé d'arrivée, nom des rues et sorties et/ou recalcul d'itinéraire ;
- trafic telles que conditions de circulation, accidents et travaux et/ou propositions d'itinéraires alternatifs ;
- alertes et réglementations routières telles que limitations de vitesse, zones de danger et radars et/ou zones scolaires et passages piétons ;
- points d'intérêt telles que stations-service, restaurants, hôtels, parkings et/ou bornes de recharge pour véhicules électriques ;
- données supplémentaires telles qu'altitude et coordonnées GPS, conditions météorologiques et/ou mode nuit/jour.

Par exemple, les informations correspondant à une aide à la conduite de type ADAS comprennent des informations relatives à au moins un élément pris dans la liste suivante :
- aides à la détection et à la surveillance telles que détection d'angle mort, reconnaissance des panneaux de signalisation, surveillance de l'attention du conducteur, aide au stationnement et/ou caméra 360° ;
- aides à la conduite et au maintien sur la route telles que régulateur de vitesse adaptatif, aide au maintien dans la voie, alerte de franchissement de ligne et/ou assistance au changement de voie ;
- aides à l'anticipation et à l'évitement de collisions telles que freinage d'urgence automatique, détection des piétons et cyclistes, alerte de collision frontale et/ou détection de trafic transversal arrière ;
- aides spécifiques à certaines conditions de conduite telles qu'assistance en descente, aide au démarrage en côte et/ou mode de conduite autonome ou semi-autonome.

Encore avantageusement, l'écran d'affichage 22 est configuré pour afficher des images réelles représentatives de toutes les informations classiquement fournies sur un tableau de bord (par exemple, la vitesse, la jauge de carburant, l'autonomie et/ou le compte-tours), sous la forme d'images fixes, d'animations et/ou de vidéos, notamment en mode de conduite manuelle, en mode de conduite autonome et/ou à l'arrêt du véhicule. Par « mode de conduite manuelle », on entend que la conduite n'est pas automatisée.

L'écran d'affichage 22 est par exemple un écran LCD (de l'anglais « *Liquid Crystal Display* »), un écran LED (de l'anglais « *Light-Emitting Diode* »), un écran OLED (de l'anglais « *Organic Light-Emitting Diode* ») ou un écran plasma.

L'afficheur tête-haute 26 comprend au moins une source de projection 28 ainsi que des organes optiques (non-illustrés).

L'au moins une source de projection 28 comporte un projecteur ou un écran.

Les organes optiques de l'afficheur tête-haute 26 comprennent des lentilles, des miroirs réflecteurs et une surface réfléchissante agencée sur un pare-brise du véhicule ou sur une lame dédiée.

L'afficheur tête-haute 26 est par exemple configuré pour afficher des images représentatives d'informations relatives à au moins un élément pris dans la liste suivante :
- vitesse du véhicule ;
- régime moteur ;
- niveau de carburant ;
- température du moteur ;
- kilométrage total et partiel ;
- position du levier de vitesse ;
- autonomie restante ;
- consommation de carburant ; et
- mode de conduite.

En variante, et notamment dans une variante dans laquelle le dispositif d'affichage 20 ne comporte pas l'afficheur tête-haute 26, l'écran d'affichage 22 est en outre configuré pour afficher des images réelles représentatives d'informations relatives à au moins un élément pris dans la liste suivante :
- vitesse du véhicule ;
- régime moteur ;
- niveau de carburant ;
- température du moteur ;
- kilométrage total et partiel ;
- position du levier de vitesse ;
- autonomie restante ;
- consommation de carburant ; et
- mode de conduite.

Le dispositif réfléchissant 32 s'étend selon un plan de réflexion PREF.

Comme illustré sur la figure 2, le plan de réflexion PREF forme par exemple un angle α aigu avec le premier plan P1.

Le dispositif réfléchissant 32 est notamment destiné à être agencé sensiblement dans le champ de vision d'un conducteur du véhicule.

En référence aux figures 2 à 4, le dispositif réfléchissant 32 comporte au moins une lame semi-réfléchissante 35, au moins un film translucide 40 et au moins une unité d'éclairage 62.

Avantageusement, le dispositif réfléchissant 32 comporte en outre au moins un film antireflet arrière 50.

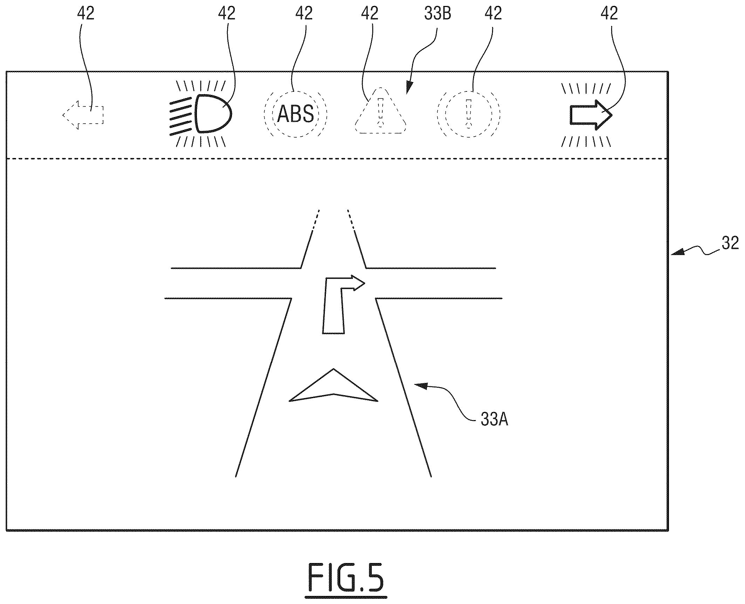

Encore avantageusement, comme illustré sur les figures 1 et 5, le dispositif réfléchissant 32 délimite dans le plan de réflexion PREF :
- une surface de réflexion 33A destinée à réfléchir les images réelles affichées par l'écran d'affichage 22 ; et
- une surface d'information 33B destinée à l'illumination d'éléments d'information 42 de l'au moins un film translucide 40 du dispositif réfléchissant 32.

Encore avantageusement, les surfaces de réflexion 33A et d'information 33B sont séparées et adjacentes dans le plan de réflexion PREF.

En particulier, comme illustré sur l'exemple de la figure 5, la surface d'information 33B est au-dessus de la surface de réflexion 33A. En variante non-illustrée, la surface d'information 33B est en dessous de la surface de réflexion 33A.

Dans ce qui suit, on décrit un dispositif réfléchissant 32 comportant une seule lame semi-réfléchissante 35, un seul film translucide 40, une seule unité d'éclairage 62 et le cas échéant un seul film antireflet arrière 50. Bien entendu, l'invention ne se limite pas à ce nombre particulier de lame ou de film et concerne également un dispositif réfléchissant comportant une pluralité de lames semi-réfléchissantes, une pluralité de films translucides, une pluralité d'unités d'éclairage et le cas échéant une pluralité de films antireflet arrières.

Avantageusement, la lame semi-réfléchissante 35 comprend un substrat 36 et par exemple un traitement semi-réflectif 56.

La lame semi-réfléchissante 35 s'étend selon le plan de réflexion PREF.

Par exemple, la lame semi-réfléchissante 35 présente un coefficient de réflexion compris entre 30 % et 40 %.

Avantageusement, la lame semi-réfléchissante 35 est réalisée en verre et/ou en matière plastique de qualité optique, par exemple en poly méthacrylate de méthyle acrylique (PMMA), en Polycarbonate (PC), ou en mélange de PMMA et de PC.

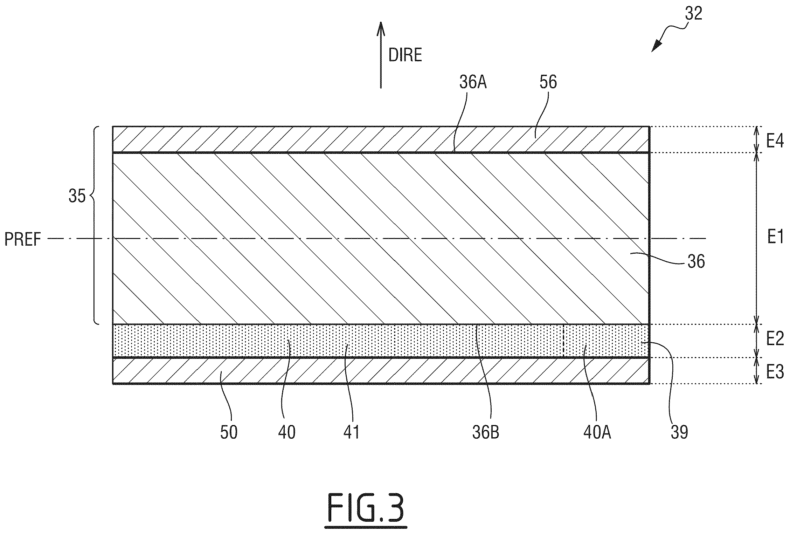

En référence aux figures 2 et 3, la lame semi-réfléchissante 35 est destinée à réfléchir les images réelles affichées par l'écran d'affichage 22 vers les passagers du véhicule pour générer des images virtuelles IVIR correspondantes dans un second plan P2.

Par exemple, le substrat 36 comprend une face avant 36A et une face arrière 36B.

La face avant 36A est orientée sensiblement vers l'écran d'affichage 22.

La face arrière 36B est opposée à la face avant 36A.

En référence à la figure 3, avantageusement, le substrat 36 présente une épaisseur E1 mesurée selon une direction d'épaisseur DIRE sensiblement orthogonale au plan de réflexion PREF, comprise entre 2 mm et 5 mm.

Le film translucide 40 est appliqué sur la lame semi-réfléchissante 35, en particulier sur la face arrière 36B du substrat 36.

Notamment, le film translucide 40 est collé sur la lame semi-réfléchissante 35, en particulier sur la face arrière 36B du substrat 36.

Le film translucide 40 s'étend parallèlement au plan de réflexion PREF.

Avantageusement, le film translucide 40 s'étend entre la lame semi-réfléchissante 35 et le film antireflet arrière 50.

Le film translucide 40 a une épaisseur E2 mesurée selon la direction d'épaisseur DIRE, notamment comprise entre 50 µm et 200 µm.

Par exemple, le film translucide 40 présente un coefficient de transparence supérieur ou égal à 90%.

Le film translucide 40 comporte au moins un élément d'information 42, avantageusement une pluralité d'éléments d'informations 42.

Avantageusement, le film translucide 40 comporte un corps 41 sur lequel les éléments d'information 42 sont imprimés et/ou gravés, en particulier micro-imprimés et/ou micro-gravés ou nano-imprimés et/ou nano-gravés. En particulier, les impressions/gravure sont destinées à ne pas être visible à l'œil nu et à collimater la lumière émise en sortie.

Avantageusement, chaque élément d'information 42 est un pictogramme, notamment un pictogramme d'indication de sécurité et/ou réglementaire.

Le pictogramme peut être choisi dans une liste comprenant :
- un indicateur d'usage de feux, tels que des feux de position, de croisement, de route, de brouillard avant et/ou arrière, de clignotants et/ou de détresse ;
- un indicateur d'anomalie comme par exemple un indicateur de niveau d'huile bas, d'usure des plaquettes de frein avant, de dysfonctionnement de l'ABS (système antiblocage des roues, de l'allemand « *Antiblockiersystem* »), de défaillance de la direction assistée, de dysfonctionnement des airbags, de défaillance de l'ESP (correcteur électronique de trajectoire, de l'anglais « *Electronic Stability Program* »), de problème d'ampoule, de niveau de liquide lave-glace bas, de défaut d'un composant électronique, de problème de dépollution du moteur, de présence d'eau dans le filtre à carburant et/ou de niveau de carburant faible ;
- un indicateur de danger comme par exemple un indicateur de frein à main serré, de défaillance des freins, de défaillance des airbags, de portière du coffre ouverte, de batterie faible, de pression anormale de l'huile de moteur, de surchauffe de l'huile de moteur, de température anormale du liquide de refroidissement, de pression anormale des pneus, de dysfonctionnement de l'antivol de direction et/ou de ceinture de sécurité non bouclée.

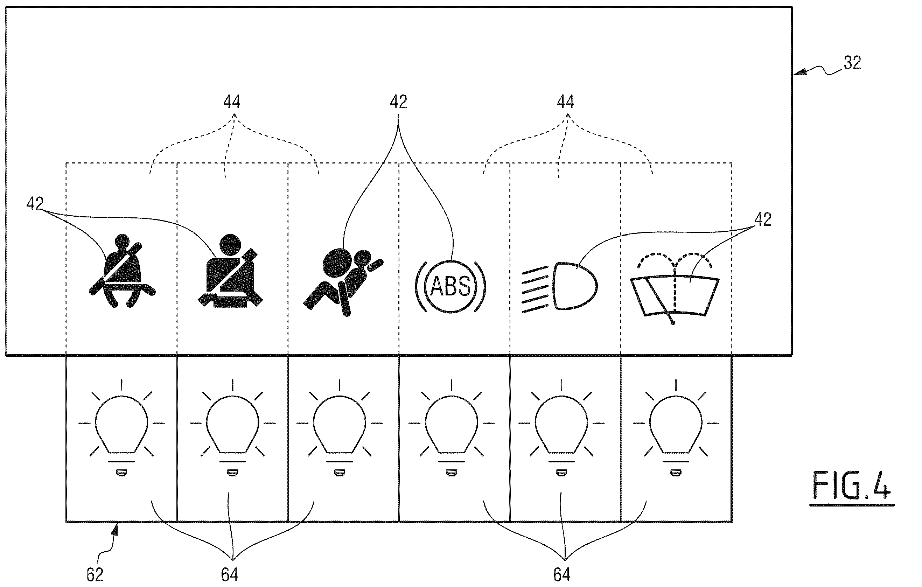

Dans l'exemple de la figure 4, le film translucide 40 comporte six éléments d'informations 42 dont deux pictogrammes de ceinture de sécurité non bouclée, un pictogramme de défaillance des airbags, un pictogramme de dysfonctionnement de l'ABS, un pictogramme d'usage de feux de croisement et un pictogramme de niveau de liquide lave-glace bas.

Dans l'exemple de la figure 5, le film translucide 40 comporte six éléments d'informations 42 dont un pictogramme d'usage de feux de clignotant gauche, un pictogramme d'usage de feux de croisement, un pictogramme de dysfonctionnement de l'ABS, un pictogramme de défaut d'un composant électronique, un pictogramme de frein à main serré et un pictogramme d'usage de feux de clignotant droit.

Encore avantageusement, le film translucide 40 comprend une partie d'information 40A dans laquelle sont agencés les éléments d'information 42.

Encore avantageusement, le film translucide 40, en particulier la partie d'information 40A du film translucide 40, comprend une pluralité de zones d'information 44.

Chaque zone d'information 44 comporte un élément d'information 42.

Les zones d'information 44 sont compartimentées, notamment de sorte que la lumière émise dans une zone d'information 44 ne pénètre pas dans la ou les zone(s) d'information 44 adjacente(s). En particulier, les zones d'information 44 sont compartimentées par un espacement suffisamment les unes des autres.

Selon un exemple particulier, plusieurs éléments d'information 42 sont superposés dans l'épaisseur du film translucide 40.

Le film antireflet arrière 50 s'étend sur l'ensemble du film translucide 40.

Par exemple, le film antireflet arrière 50 présente une surface recouverte de motifs nanométriques. Ces motifs nanométriques diffusent et absorbent la lumière, ce qui réduit les réflexions.

Par exemple, le film antireflet arrière 50 est un film antireflet imitant la structure fine et irrégulière des yeux des papillons de nuit, connu notamment sous la dénomination commerciale MOSMITE^{™}.

Avantageusement, le film antireflet arrière 50 présente une épaisseur E3 mesurée selon la direction d'épaisseur DIRE, notamment comprise entre 50 µm et 400 µm.

Le traitement semi-réflectif 56 s'étend sur au moins une partie de la face avant 36A du substrat 36 de sorte à être agencée en regard de l'au moins une partie d'information 40A. Selon une variante non-illustrée, le traitement semi-réflectif 56 s'étend sur au moins une partie de la face arrière 36B du substrat 36 de sorte à être agencée en regard de l'au moins une partie d'information 40A.

Par exemple, le traitement semi-réflectif 56 est un revêtement.

Avantageusement, le traitement semi-réflectif 56 présente une épaisseur E4 mesurée selon la direction d'épaisseur DIRE, notamment comprise entre 10 µm et 400 µm.

En référence aux figures 2 et 4, l'unité d'éclairage 62 est apte à éclairer les éléments d'information 42.

L'unité d'éclairage 62 comprend une source de lumière 64 pour chaque élément d'information 42.

Comme illustré sur la figure 2, chaque source de lumière 64 est agencée le long d'un bord 31 du dispositif réfléchissant 32 dans le plan de réflexion PREF, en particulier le long d'un bord 39 du film translucide 40.

Chaque source de lumière 64 est configurée pour éclairer l'élément d'information 42 correspondant à travers l'épaisseur du film translucide 40.

En particulier, comme illustré sur l'exemple de la figure 4, chaque source de lumière 64 est agencée en regard d'une zone d'information 44 et est configurée pour éclairer uniquement la zone d'information 44 en regard de laquelle elle est agencée.

Par exemple, chaque source de lumière 64 est une diode électroluminescente (abrégé en DEL en français, ou LED, de l'anglais « *Light-Emitting Diode* »).

Avantageusement, le champ de projection et de dissipation de la lumière émise par chaque source de lumière 64 permet d'introduire de la lumière de façon optimum à l'intérieur du film translucide 40 et est de façon générale comprise dans un cône de 10°.

Dans l'exemple de la figure 5 :
- la surface de réflexion 33A réfléchit les images réelles affichées par l'écran d'affichage 22, qui ici sont représentatives d'informations correspondant à une assistance à la navigation par GPS ;
- certains éléments d'information 42 sont illuminés à travers la surface d'information 33B, en particulier un indicateur d'usage de feux de croisement et indicateur d'usage de feux de clignotant droit, les autres éléments d'information 42 n'étant pas illuminés et étant invisibles aux passagers.

Grâce à l'invention, les images virtuelles IVIR sont en profondeur par rapport aux éléments d'information 42. Ceci permet de mieux mettre en évidence les éléments d'information 42 par rapport aux images générées par l'écran d'affichage 22. Ceci améliore également l'esthétique de l'affichage, en donnant une impression de vue en 3D aux passagers.

En outre, la présente solution permet de pouvoir afficher les pictogrammes avec une plus grande intensité lumineuse, notamment en comparaison à l'intensité lumineuse réfléchie par le dispositif réfléchissant.

En outre, grâce à l'invention, l'encombrement du système d'affichage 16 est réduit. En effet, l'agencement de l'unité d'éclairage 62 le long d'un bord 39 du film translucide 40 et l'éclairage des éléments d'information 42 à travers l'épaisseur du film translucide 40 permet de réduire notablement l'épaisseur du dispositif réfléchissant 32.

## Revendications

1. Système d'affichage (16) pour un véhicule, comprenant :
- un dispositif d'affichage (20) comportant au moins un écran d'affichage (22) destiné à être dissimulé des passagers dudit véhicule et étant configuré pour afficher des images réelles dans un premier plan (P1) ;
- un dispositif réfléchissant (32) s'étendant selon un plan de réflexion (PREF) et comportant :
- au moins une lame semi-réfléchissante (35) s'étendant selon le plan de réflexion (PREF) et destinée à réfléchir les images réelles affichées par l'au moins un écran d'affichage (22) vers les passagers pour générer des images virtuelles (IVIR) correspondantes dans un second plan (P2) ;
- au moins un film translucide (40) appliqué sur l'au moins une lame semi-réfléchissante (35) et comportant au moins un élément d'information (42), l'au moins un film translucide (40) s'étendant parallèlement au plan de réflexion (PREF) et ayant une épaisseur (E2) selon une direction sensiblement perpendiculaire au plan de réflexion (PREF) ;
- au moins une unité d'éclairage (62) apte à éclairer l'au moins un élément d'information (42) ;
**caractérisé en ce que** l'au moins une unité d'éclairage (62) comprend une source de lumière (64) pour chaque élément d'information (42), chaque source de lumière (64) étant agencée le long d'un bord (39) de l'au moins un film translucide (40) et étant configurée pour éclairer l'élément d'information (42) correspondant à travers l'épaisseur (E2) de l'au moins un film translucide (40).

2. Système d'affichage (16) selon la revendication 1, dans lequel l'au moins une lame semi-réfléchissante (35) comprend un substrat (36) comportant une face avant (36A) orientée sensiblement vers l'au moins un écran d'affichage (22) et une face arrière (36B) opposée à la face avant (36A), l'au moins un film translucide (40) étant appliquée sur la face arrière (36B) du substrat (36).

3. Système d'affichage (16) selon la revendication 2, dans lequel le dispositif réfléchissant (32) comprend au moins un film antireflet arrière (50) s'étendant sur l'ensemble de l'au moins un film translucide (40), de sorte que l'au moins un film translucide (40) s'étende entre la lame semi-réfléchissante (35) et le film antireflet arrière (50).

4. Système d'affichage (16) selon la revendication 2 ou 3, dans lequel l'au moins un film translucide (40) comprend une partie d'information (40A) dans laquelle sont agencés les éléments d'information (42), la lame semi-réfléchissante (35) comprenant au moins un traitement semi-réflectif (56) s'étendant sur au moins une partie de la face avant (36A) du substrat (36) de sorte à être agencée en regard d'au moins l'au moins une partie d'information (40A).

5. Système d'affichage (16) selon l'une quelconque des revendications précédentes, dans lequel l'au moins un élément d'information (42) est un pictogramme.

6. Système d'affichage (16) selon la revendication 5, dans lequel le pictogramme est choisi dans une liste comprenant :
- un indicateur d'usage de feux, tels que des feux de position, de croisement, de route, de brouillard avant et/ou arrière, de clignotants et/ou de détresse ;
- un indicateur d'anomalie comme par exemple un indicateur de niveau d'huile bas, d'usure des plaquettes de frein avant, de dysfonctionnement de l'ABS, de défaillance de la direction assistée, de dysfonctionnement des airbags, de défaillance de l'ESP, de problème d'ampoule, de niveau de liquide lave-glace bas, de défaut d'un composant électronique, de problème de dépollution du moteur, de présence d'eau dans le filtre à carburant et/ou de niveau de carburant faible ;
- un indicateur de danger comme par exemple un indicateur de frein à main serré, de défaillance des freins, de défaillance des airbags, de portière du coffre ouverte, de batterie faible, de pression anormale de l'huile de moteur, de surchauffe de l'huile de moteur, de température anormale du liquide de refroidissement, de pression anormale des pneus, de dysfonctionnement de l'antivol de direction et/ou de ceinture de sécurité non bouclée.

7. Système d'affichage (16) selon l'une quelconque des revendications précédentes, dans lequel l'au moins un élément d'information (42) est imprimé et/ou gravé, en particulier micro-imprimé et/ou micro-gravé ou nano-imprimé et/ou nano-gravé, sur un corps (41) de l'au moins un film translucide (40).

8. Système d'affichage (16) selon l'une quelconque des revendications précédentes, dans lequel l'au moins un film translucide (40) comprend une pluralité de zones d'information (44), chaque zone d'information (44) comportant un élément d'information (42), les zones d'information (44) étant compartimentées, chaque source de lumière (64) étant agencée en regard d'une zone d'information (44) et étant configurée pour éclairer uniquement la zone d'information (44) en regard de laquelle elle est agencée.

9. Système d'affichage (16) selon l'une quelconque des revendications précédentes, dans lequel le dispositif réfléchissant (32) délimite dans le plan de réflexion (PREF) :
- une surface de réflexion (33A) destinée à réfléchir les images réelles affichées par l'au moins un écran d'affichage (22) ; et
- une surface d'information (33B) destinée à l'illumination des éléments d'information (42) ; les surfaces de réflexion (33A) et d'information (33B) étant séparées et adjacentes.

10. Tableau de bord (10) d'un véhicule comprenant un corps (12) et un système d'affichage (16) selon l'une quelconque des revendications précédentes, le système d'affichage (16) étant monté sur le corps (12) du tableau de bord (10).
